# EUROPEAN PATENT APPLICATION

(11) **EP 4 841 818 A1**
(43) Date of publication of application: **18.11.2026**
(21) Application number: 25738491.7
(22) Date of filing: 09.01.2025
(51) Int. Cl.: H01M 50/593

(54) **INSULATING MEMBER, TAB ASSEMBLY, BATTERY CELL, BATTERY, AND ELECTRIC DEVICE**

(30) Priority: 09.01.2024 CN 202410032903
(71) Applicant: NingDe Amperex Technology Limited, Ningde City, Fujian 352100 (CN)
(72) Inventor: QU, Changming, Ningde, Fujian 352100 (CN); WU, Biao, Ningde, Fujian 352100 (CN); SHEN, Yuting, Ningde, Fujian 352100 (CN)
(74) Representative: Dehns Germany Partnerschaft mbB
(86) International application number: PCT/CN2025/071464
(87) International publication number: WO 2025/148962

(57) **Abstract**

This application discloses an insulating member, a tab assembly, a battery cell, a battery, and an electrical apparatus. The insulating member is configured to connect a tab and includes a first base layer, a first encapsulation layer, and a second encapsulation layer. The first base layer is located between the first encapsulation layer and the second encapsulation layer. A melting point A of the first base layer meets A ≥ 185°C. Under a condition of a large temperature rise, the insulating member melts, causing the tab to be in contact with an electrode assembly or a metal layer of a battery cell housing, resulting in a short circuit. By providing the first base layer with a higher melting point, the risk of a short circuit caused by the melting of the first base layer is reduced.

## Description

### TECHNICAL FIELD

This application relates to the field of energy storage technologies, and particularly relates to an insulating member, a tab assembly, a battery cell, a battery, and an electrical apparatus.

### BACKGROUND

With continuous updates and developments in lithium-ion battery technologies, application fields of lithium-ion batteries are constantly expanding, and safety issues of battery cells are increasingly receiving public attention. Safety accidents of lithium-ion batteries characterized by thermal runaway triggered by external short circuits occur frequently, posing certain obstacles to the development of lithium-ion batteries. How to address safety issues of battery cells is a challenge that the lithium-ion battery industry must face at present.

### SUMMARY

In view of this, it is necessary to provide an insulating member, a tab assembly, a battery cell, a battery, and an electrical apparatus, so as to reduce the risk of a short circuit.

An embodiment of this application provides an insulating member configured to connect a tab and includes a first base layer, a first encapsulation layer, and a second encapsulation layer. The first base layer is located between the first encapsulation layer and the second encapsulation layer. A melting point A of the first base layer meets A ≥ 185°C. Under a condition of a large temperature rise, the insulating member melts, causing the tab to be in contact with an electrode assembly or a metal layer of a battery cell housing, resulting in a short circuit. By providing the first base layer with a higher melting point, the risk of a short circuit caused by the melting of the first base layer is reduced.

In one or more optional embodiments above, the melting point of the first base layer is higher than a melting point of the first encapsulation layer. When the internal temperature of the battery cell rises, the first encapsulation layer can melt first and form a pressure relief channel, which facilitates pressure relief. The melting point of the first base layer is higher than a melting point of the second encapsulation layer. When the internal temperature of the battery cell rises, the second encapsulation layer can melt first and form a pressure relief channel, which facilitates pressure relief and reduces the risk of fire.

In one or more optional embodiments above, a thickness of the first base layer is 6% to 10% of a thickness of the insulating member, which facilitates reduction of pore channels in a battery cell housing and reduces the risk of leakage and short circuit. If the thickness of the first base layer is too thick, pore channels are prone to appear in an encapsulation triangle region (edge region of the insulating member) of a sealing portion. If the thickness of the first base layer is too thin, melting easily occurs, exposing the tab and leading to a short circuit.

In one or more optional embodiments above, 220°C ≤ A ≤ 400°C, which further facilitates reduction of the risk of a short circuit caused by the contact between tab and the metal layer of the battery cell housing and reduction of the risk of triggering thermal runaway.

In one or more optional embodiments above, 300°C ≤ A ≤ 500°C, which further facilitates reduction of the risk of a short circuit caused by the contact between the tab and the metal layer of the battery cell housing and reduction of the risk of triggering thermal runaway.

In one or more optional embodiments above, a melting point B of the first encapsulation layer meets 115°C ≤ B ≤ 145°C, which is beneficial for relieving the internal pressure of the battery cell housing, improving safety, reducing occurrences of premature failure of the battery cell, and increasing the service life of the battery cell.

In one or more optional embodiments above, a melting point C of the second encapsulation layer meets 115°C ≤ C ≤ 145°C, which is beneficial for relieving the internal pressure of the battery cell housing, improving safety, reducing occurrences of premature failure of the battery cell, and increasing the service life of the battery cell.

In one or more optional embodiments above, a thickness of the first encapsulation layer is 30% to 44% of the thickness of the insulating member, which is beneficial for enhancing the connection strength between the first encapsulation layer and a bonding layer, facilitating pressure relief, and reducing occupied space.

In one or more optional embodiments above, a thickness of the second encapsulation layer is 30% to 44% of the thickness of the insulating member, which is beneficial for enhancing the connection strength between the second encapsulation layer and the tab, facilitating pressure relief, and reducing occupied space.

In one or more optional embodiments above, the insulating member includes two connection layers. The first encapsulation layer is connected to the first base layer through one of the connection layers, and the second encapsulation layer is connected to the first base layer through the other of the connection layers.

In one or more optional embodiments above, a thickness of the connection layer is 3% to 8% of the thickness of the insulating member, which facilitates enhancing the connection strength between the first base layer and the first encapsulation layer and reducing occupied space.

In one or more optional embodiments above, a difference between the melting point of the first base layer and the melting point of the first encapsulation layer is greater than 62°C, and/or a difference between the melting point of the first base layer and the melting point of the second encapsulation layer is greater than 62°C, which reduces the risk of a short circuit.

In one or more optional embodiments above, a difference between the melting point of the first base layer and the melting point of the first encapsulation layer is greater than 147°C, and/or a difference between the melting point of the first base layer and the melting point of the second encapsulation layer is greater than 147°C, which further reduces the risk of a short circuit.

In one or more optional embodiments above, a difference between the melting point of the first base layer and the melting point of the first encapsulation layer is greater than 227°C, and/or a difference between the melting point of the first base layer and the melting point of the second encapsulation layer is greater than 227°C, which further reduces the risk of a short circuit.

In one or more optional embodiments above, after the temperature exceeds 180°C, a softening melting interval of the first base layer is 200°C to 500°C.

In one or more optional embodiments above, a melting range of the insulating member is 200°C to 500°C.

In one or more optional embodiments above, a melting point D of the connection layer meets 100°C ≤ D ≤ 180°C.

In one or more optional embodiments above, the connection layer includes one or more of hot melt adhesive, aminosilane glue, polyurethane adhesive, epoxy resin, and acrylic adhesive.

In one or more optional embodiments above, the connection layer includes a first type adhesive and a second type adhesive. The first type adhesive includes one or more of silica gel, thickener, and phenolic resin. The second type adhesive includes one or more of silane coupling agent, curing agent, and amino resin.

In one or more optional embodiments above, the first base layer includes one or more of polyimide, polyamide-imide, polyethyleneimine, polyethylene naphthalate, polyethylene terephthalate, and modified polypropylene.

An embodiment of this application provides a tab assembly including a tab and two insulating members according to any one of the embodiments above. Along a thickness direction of the tab, the tab is disposed between the two insulating members.

In one or more optional embodiments above, the tab assembly is soaked in dimethyl carbonate for 24 hours, and a peel strength between the tab and the insulating member is 0.2 N/mm to 2.0 N/mm.

An embodiment of this application provides a battery cell including a battery cell housing, an electrode assembly, and a tab assembly. The tab assembly includes a tab and two insulating members. The battery cell housing includes a body portion and a sealing portion. The electrode assembly is disposed in the body portion. The tab is connected to the electrode assembly and extends from the sealing portion. Along a thickness direction of the tab, the tab is disposed between the two insulating members. Each of the insulating members includes a first base layer, a first encapsulation layer, and a second encapsulation layer. Along the thickness direction of the tab, the first base layer is located between the first encapsulation layer and the second encapsulation layer. The first encapsulation layer is connected to the sealing portion, and the second encapsulation layer is connected to the tab. After the temperature exceeds 180°C, the melting point A of the first base layer meets A ≥ 185°C. Under a condition of a large temperature rise, the insulating member melts, causing the tab to be in contact with the electrode assembly or a metal layer of the battery cell housing, resulting in a short circuit. By providing the first base layer with a higher melting point, this application reduces the risk of a short circuit caused by the melting of the first base layer.

In one or more optional embodiments above, along a thickness direction of the battery cell housing, the sealing portion includes two bonding layers. Along the thickness direction of the battery cell housing, the sealing portion includes a first region not overlapping with the insulating member. The two bonding layers located in the first region are bonded together. Twice a thickness of the first base layer is less than a sum of thicknesses of the two bonding layers, or a sum of thicknesses of the first base layers on two sides of the tab is less than a sum of thicknesses of the two bonding layers, which reduces pore channels in the battery cell housing and reduces the risk of leakage and short circuit.

In one or more optional embodiments above, a sum of a thickness of the insulating member and the thickness of the bonding layer is less than the sum of thicknesses of the two bonding layers, which further reduces pore channels in the battery cell housing and reduces the risk of leakage and short circuit.

In one or more optional embodiments above, along the thickness direction of the battery cell housing, the sealing portion includes a second region overlapping with the insulating member and not overlapping with the tab. The second region is adjacent to the first region. Along the thickness direction of the tab, a difference between a thickness of the first region and a thickness of the second region is less than 50 µm.

In one or more optional embodiments above, the tab includes a first section, a second section, and a third section. At least a portion of the first section is connected to the electrode assembly. The second section is bent and connected to the first section, and the second section accounts for 5% to 70% of a thickness of the battery cell. The third section is bent and connected to the second section, and a portion of the third section extends from the sealing portion.

An embodiment of this application provides a battery including the battery cell according to any one of the embodiments above.

An embodiment of this application provides an electrical apparatus including the battery according to any one of the embodiments above.

### DESCRIPTION OF DRAWINGS

FIG. 1 is a schematic structural diagram of a battery cell according to some embodiments.
FIG. 2 is a schematic exploded view of the battery cell according to some embodiments.
FIG. 3 is a schematic cross-sectional view of the battery cell according to some embodiments.
FIG. 4 is a schematic cross-sectional view of a battery cell housing according to some embodiments.
FIG. 5 is a schematic structural diagram of a tab, a first insulating member, and a second insulating member according to some embodiments.
FIG. 6 is a schematic structural diagram of a battery and an electrical apparatus according to some other embodiments.

**Reference signs of main components:**

| | |
|---|---|
| Battery cell | 100 |
| First region | 101 |
| Second region | 102 |
| Battery cell housing | 10 |
| Bonding layer | 10a |
| Metal layer | 10b |
| Outer layer | 10c |
| Body portion | 11 |
| First housing | 111 |
| First concave portion | 111a |
| Second housing | 112 |
| Second concave portion | 112a |
| First extended edge | 113 |
| Second extended edge | 114 |
| Sealing portion | 12 |
| First sealing portion | 12a |
| Second sealing portion | 12b |
| Electrode assembly | 20 |
| First electrode sheet | 21 |
| Second electrode sheet | 22 |
| Separator | 23 |
| Tab | 30 |
| First section | 31 |
| Second section | 32 |
| Third section | 33 |
| First protective layer | 100a |
| Insulating member | 40 |
| First base layer | 41 |
| First encapsulation layer | 42 |
| Second encapsulation layer | 43 |
| Connection layer | 44 |
| Tab assembly | 120 |
| Battery | 200 |
| Electrical apparatus | 300 |

This application will be further described with reference to the accompanying drawings in the following specific embodiments.

### DESCRIPTION OF EMBODIMENTS

The following specific embodiments are exemplary and not restrictive, aiming to provide a basic understanding of this application but not to confirm critical or decisive elements of this application and not to limit the scope of protection. As long as there is no structural conflict, the various technical features mentioned in the embodiments can be combined in any manner.

When one component is deemed as being "disposed on" another component, it may be directly disposed on the another component, or with a component possibly present therebetween. When one component is deemed as being "connected to" another component, it may be directly connected to the another component, or with a component possibly present therebetween.

Unless otherwise defined, the term "multiple" in the specification specifically indicates that there are two or more components when used for describing the number of components.

An embodiment of this application provides a battery cell including a battery cell housing, an electrode assembly, and a tab assembly. The battery cell housing includes a body portion and a sealing portion. The electrode assembly is disposed in the body portion. The tab assembly includes a tab and two insulating members. The tab is connected to the electrode assembly and extends from the sealing portion. Along a thickness direction of the tab, the tab is disposed between the two insulating members. Each of the insulating members includes a first base layer, a first encapsulation layer, and a second encapsulation layer. Along the thickness direction of the tab, the first base layer is located between the first encapsulation layer and the second encapsulation layer. The first encapsulation layer is connected to the sealing portion, and the second encapsulation layer is connected to the tab. After the temperature exceeds 180°C, a melting point A of the first base layer meets A ≥ 185°C. Under a condition of a large temperature rise, the insulating member melts, causing the tab to be in contact with the electrode assembly or a metal layer of the battery cell housing, resulting in a short circuit. By providing the first base layer with a higher melting point, this application reduces the risk of a short circuit caused by the melting of the first base layer.

The following describes some embodiments of this application with reference to the accompanying drawings. In the absence of conflict, the embodiments and features in the embodiments below can be combined with each other.

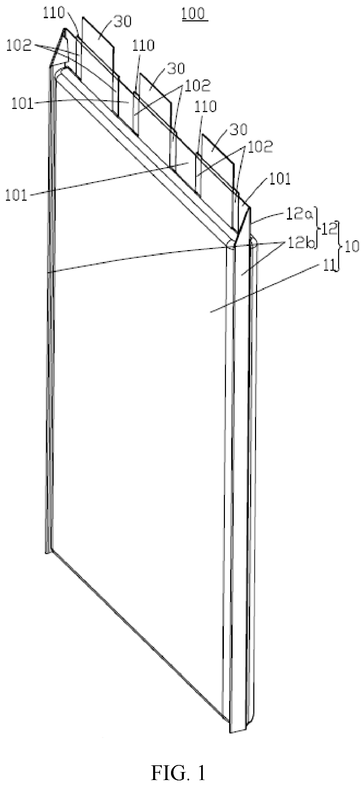

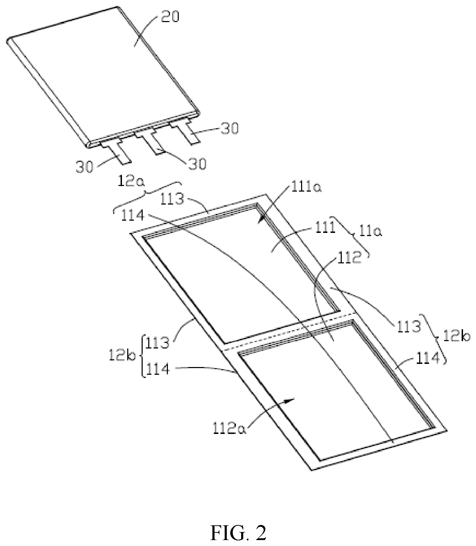

Referring to FIG. 1 to FIG. 5, an embodiment of this application provides a battery cell 100 including a battery cell housing 10, an electrode assembly 20, and a tab assembly 120. The tab assembly 120 includes a tab 30 and two insulating members 40. The electrode assembly 20 is disposed in the battery cell housing 10. The tab 30 is connected to the electrode assembly 20 and extends from the battery cell housing 10. Along a thickness direction of the tab 30, the tab 30 is disposed between the two insulating members 40.

In some embodiments, the battery cell housing 10 may be a packaging bag obtained by encapsulation with an encapsulation film (such as an aluminum-plastic film), meaning the battery cell 100 is a pouch battery cell.

In some embodiments, the battery cell housing 10 includes a bonding layer 10a, a metal layer 10b, and an outer layer 10c that are arranged in a stacked manner. The metal layer 10b is disposed between the bonding layer 10a and the outer layer 10c. The outer layer 10c is located at an outermost layer of the battery cell housing 10. The outer layer 10c may be a nylon layer or a composite layer of polyethylene terephthalate (PET) and nylon, and serves the protective functions of preventing pollution, resisting corrosion, and protecting against damage caused by external forces. The metal layer 10b may include one of aluminum and steel, plays the roles of waterproofing and blocking, and is used to shape the battery cell housing 10. The bonding layer 10a is a heat-sealing layer. The bonding layer 10a may include a polymer. The polymer includes one of polypropylene and polyethylene. The bonding layer 10a is used for sealing the battery cell housing 10 through hot pressing and for separating the metal layer 10b from the electrode assembly 20, so as to reduce the risk of electrolyte within the battery cell housing 10 leaking and corroding the metal layer 10b.

In some embodiments, the battery cell housing 10 includes a body portion 11 and a sealing portion 12. The body portion 11 is connected to the sealing portion 12. The electrode assembly 20 is disposed in the body portion 11. The tab 30 extends from the sealing portion 12 out of the battery cell housing 10.

In some embodiments, the body portion 11 includes a first housing 111 and a second housing 112. The first housing 111 is provided with a first concave portion 111a, and the second housing 112 is provided with a second concave portion 112a. The first housing 111 and the second housing 112 are connected and form an accommodation space. A portion of the electrode assembly 20 is disposed in the first concave portion 111a, and a portion is disposed in the second concave portion 112a. A peripheral side of the first housing 111 extends outward to form a first extended edge 113. A peripheral side of the second housing 112 extends outward to form a second extended edge 114. After the first housing 111 is connected to the second housing 112, the first extended edge 113 and the second extended edge 114 overlap and are sealed together, forming the sealing portion 12.

In some embodiments, the first housing 111 and the second housing 112 may be an integral structure or may be a separate structure.

In some embodiments, the sealing portion 12 includes a first sealing portion 12a. The tab 30 extends from the first sealing portion 12a out of the battery cell housing 10.

In some embodiments, the sealing portion 12 includes a second sealing portion 12b. The second sealing portion 12b is connected to the first sealing portion 12a.

In some embodiments, the electrode assembly 20 includes a first electrode sheet 21, a second electrode sheet 22, and a separator 23. The separator 23 is disposed between the first electrode sheet 21 and the second electrode sheet 22. The separator 23 is configured to prevent direct contact between the first electrode sheet 21 and the second electrode sheet 22, so as to reduce the risk of a short circuit between the first electrode sheet 21 and the second electrode sheet 22.

In some embodiments, the electrode assembly 20 is a wound structure, meaning the first electrode sheet 21, the separator 23, and the second electrode sheet 22 are sequentially stacked and wound to form the electrode assembly 20. In some other embodiments, the electrode assembly 20 may alternatively be a laminated structure, meaning the first electrode sheet 21, the separator 23, and the second electrode sheet 22 are sequentially stacked to form one electrode assembly unit, and multiple electrode assembly units are then laminated to form the electrode assembly 20. In some embodiments, the first electrode sheet 21 is a negative electrode sheet or a positive electrode sheet, and the second electrode sheet 22 is an electrode sheet of opposite polarity to the first electrode sheet 21. This application uses the first electrode sheet 21 being a positive electrode sheet and the second electrode sheet 22 being a negative electrode sheet as an example for illustration.

In some embodiments, the tab 30 includes a first section 31, a second section 32, and a third section 33. At least a portion of the first section 31 is connected to the first electrode sheet 21 or the second electrode sheet 22. The second section 32 is bent and connected to the first section 31. The third section 33 is bent and connected to the second section 32. A portion of the third section 33 extends from the sealing portion 12. A portion of the third section 33 extends from the insulating member 40 and is configured to be connected to other components for energy transmission.

In some embodiments, the first section 31 is welded to the first electrode sheet 21 or the second electrode sheet 22. Welding methods include laser welding and ultrasonic welding.

In some embodiments, along a thickness direction of the battery cell 100, a length of the second section 32 is 5% to 70% of a thickness of the battery cell 100, which facilitates reduction of headspace occupied by the tab 30 in the battery cell 100. Optionally, the length of the second section 32 is any one of 5%, 10%, 15%, 20%, 25%, 30%, 35%, 40%, 45%, 50%, 55%, 60%, 65%, or 70% of the thickness of the battery cell 100.

In some embodiments, the battery cell 100 includes a first protective layer 100a. The first protective layer 100a covers a portion in which the first section 31 overlaps with the first electrode sheet 21, which can reduce the risk of burrs piercing the separator 23 and causing a short circuit between the first electrode sheet 21 and the second electrode sheet 22.

In some embodiments, the battery cell 100 includes at least three tabs 30. When the number of tabs 30 is three, the polarities of two of these tabs 30 are opposite the polarity of another tab 30. When the number of tabs 30 is four, the polarities of three tabs 30 are opposite the polarity of another tab 30, or the polarities of two tabs 30 are opposite the polarities of the other two tabs 30. When the battery cell has three tabs, at least one tab 30 needs to be bent and extend from the battery cell housing 10.

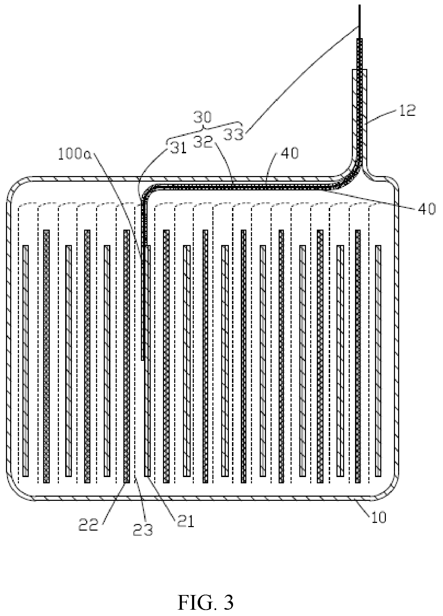

Referring to FIG. 3, FIG. 4, and FIG. 5, in some embodiments, each of the insulating members 40 includes a first base layer 41, a first encapsulation layer 42, and a second encapsulation layer 43. Along the thickness direction of the tab 30, the first base layer 41 is located between the first encapsulation layer 42 and the second encapsulation layer 43. The first encapsulation layer 42 is connected to the sealing portion 12, and the second encapsulation layer 43 is connected to the tab 30. After the temperature exceeds 180°C, a melting point A of the first base layer 41 meets A ≥ 185°C.

In some embodiments, the tab assembly 120 is soaked in DMC (dimethyl carbonate) for 24 hours, and a peel strength between the tab 30 and the insulating member 40 is 0.2 N/mm to 2.0 N/mm. Within this range, leakage of the battery cell can be effectively reduced.

In some embodiments, the testing method is as follows:

The insulating member 40 and the tab 30 are fully immersed in E173 electrolyte, baked at 85°C for 1 day/3 days/7 days/14 days, then removed from the oven, left standing at room temperature for 30 minutes, after which the electrolyte is discarded. The sample is soaked in anhydrous ethanol for 10 minutes and then dried.

A direction perpendicular to the tab is taken, the insulating member 40 and the tab 30 are manually peeled apart, and a high-speed tensile testing machine is used to test the peel strength between the insulating member 40 and the tab 30 (test speed: 175 mm/min). After peeling, the insulating member 40 shows no discoloration or detachment, and the tab 30 shows no corrosion.

In some embodiments, a melting range of the insulating member 40 is 200°C to 500°C.

Since the tab 30 is bent, the second section 32 is close to the electrode assembly 20. Under a condition of a large temperature rise, the insulating member 40 melts, causing the tab 30 to be in contact with the electrode assembly 20 or the metal layer 10b of the battery cell housing 10, resulting in a short circuit. By providing the first base layer 41 with a higher melting point, this application reduces the risk of the first base layer 41 melting and causing a short circuit.

In some embodiments, 220°C ≤ A ≤ 400°C, which further facilitates reduction of the risk of a short circuit caused by the contact between the tab 30 and the electrode assembly 20 or the contact between the tab 30 and the metal layer 10b and reduction of the risk of triggering thermal runaway.

Optionally, the melting point A of the first base layer 41 may be any one of 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, or 400°C.

In some embodiments, 300°C ≤ A ≤ 500°C, which further facilitates reduction of the risk of a short circuit caused by the contact between the tab 30 and the electrode assembly 20 or the contact between the tab 30 and the metal layer 10b and reduction of the risk of triggering thermal runaway.

Optionally, the melting point A of the first base layer 41 may be any one of 300°C, 310°C, 320°C, 330°C, 340°C, 350°C, 360°C, 370°C, 380°C, 390°C, 400°C, 410°C, 420°C, 430°C, 440°C, 450°C, 460°C, 470°C, 480°C, 490°C, or 500°C.

In some embodiments, a melting range of the first base layer 41 is 200°C to 500°C.

In some embodiments, a material of the first base layer 41 includes one or more of polypropylene (PP), polyimide (PI), polyethylene terephthalate (PET), polyethylene naphthalate (PEN), polyetherimide (PEI), or polyamide-imide (PAI).

In some embodiments, the material of the first base layer 41 may have its melting point adjusted by the following methods:

Changing molecular weight: Increasing molecular weight can raise the melting point because longer molecular chains increase intermolecular forces.

Changing molecular structure: Introducing crosslinking or branching structures can raise the melting point. By changing reaction conditions or using different modification methods, the molecular structure can be adjusted.

Adding fillers or additives: Adding an appropriate filler or additive to the polymer material can change its physical properties, including the melting point.

In some embodiments, the first encapsulation layer 42 is connected to the bonding layer 10a. Optionally, the first encapsulation layer 42 and the bonding layer 10a are bonded together through hot pressing.

In some embodiments, a melting point of the first encapsulation layer 42 is lower than the melting point of the first base layer 41. When the internal temperature of the battery cell 100 rises, the first encapsulation layer 42 can melt first and form a pressure relief channel, which facilitates pressure relief and reduces the risk of fire.

In some embodiments, a melting point B of the first encapsulation layer 42 meets 115°C ≤ B ≤ 145°C. When the temperature of the melting point B is lower (below 115°C), the battery cell 100 is prone to premature failure, which reduces the service life of the battery cell 100. When the temperature of the melting point B is higher (above 145°C), pressure relief is delayed, which is not conducive to the safety of the battery cell 100. Limiting 115°C ≤ B ≤ 145°C is further beneficial for relieving the internal pressure of the battery cell housing 10, improving safety, reducing occurrences of premature failure of the battery cell 100, and increasing the service life of the battery cell 100.

Optionally, the melting point B of the first encapsulation layer 42 may be any one of 115°C, 116°C, 117°C, 118°C, 119°C, 120°C, 121°C, 122°C, 123°C, 124°C, 125°C, 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, or 145°C.

In some embodiments, meeting 115°C ≤ B ≤ 135°C can further facilitate pressure relief.

In some embodiments, a material of the first encapsulation layer 42 includes polypropylene.

In some embodiments, the second encapsulation layer 43 is connected to the tab 30. Optionally, the second encapsulation layer 43 and the tab 30 are bonded together through hot pressing.

In some embodiments, the melting point of the second encapsulation layer 43 is lower than the melting point of the first base layer 41. When the internal temperature of the battery cell 100 rises, the second encapsulation layer 43 can melt first and form a pressure relief channel, which facilitates pressure relief.

In some embodiments, a melting point C of the second encapsulation layer 43 meets 115°C ≤ C ≤ 145°C. When the temperature of the melting point C is lower (below 115°C), the battery cell 100 is prone to premature failure, which reduces the service life of the battery cell 100. When the temperature of the melting point B is higher (above 145°C), pressure relief is delayed, which is not conducive to the safety of the battery cell 100. Limiting 115°C ≤ C ≤ 145°C is further beneficial for relieving the internal pressure of the battery cell housing 10, improving safety, reducing occurrences of premature failure of the battery cell 100, and increasing the service life of the battery cell 100.

Optionally, the melting point C of the second encapsulation layer 43 may be any one of 115°C, 116°C, 117°C, 118°C, 119°C, 120°C, 121°C, 122°C, 123°C, 124°C, 125°C, 126°C, 127°C, 128°C, 129°C, 130°C, 131°C, 132°C, 133°C, 134°C, 135°C, 136°C, 137°C, 138°C, 139°C, 140°C, 141°C, 142°C, 143°C, 144°C, or 145°C.

In some embodiments, meeting 115°C ≤ C ≤ 135°C can further facilitate pressure relief.

In some embodiments, a material of the second encapsulation layer 43 includes polypropylene.

In some embodiments, the insulating member 40 includes two connection layers 44. The first encapsulation layer 42 is connected to the first base layer 41 through one of the connection layers 44, and the second encapsulation layer 43 is connected to the first base layer 41 through the other of the connection layers 44.

Since the materials and melting points of the first base layer 41 and the first encapsulation layer 42 are different, and the materials and melting points of the first base layer 41 and the second encapsulation layer 43 are different, compounding through a high-temperature casting process is not feasible. The connection layers 44 facilitate bonding between the first base layer 41 and the first encapsulation layer 42 and between the first base layer 41 and the second encapsulation layer 43.

In some embodiments, a material of the connection layer 44 includes one or more of hot melt adhesive, aminosilane glue, polyurethane adhesive, epoxy resin, and acrylic adhesive.

In some embodiments, the material of the connection layer 44 includes a first type adhesive and a second type adhesive. The first type adhesive includes one or more of silica gel, thickener, and phenolic resin. The second type adhesive includes one or more of silane coupling agent, curing agent, and amino resin.

In some embodiments, a melting point D of the connection layer 44 meets 100°C ≤ D ≤ 180°C.

Optionally, the melting point D of the connection layer 44 may be any one of 100°C, 105°C, 110°C, 115°C, 120°C, 125°C, 130°C, 135°C, 140°C, 145°C, 150°C, 155°C, 160°C, 165°C, 170°C, 175°C, or 180°C.

In some embodiments, during testing of the melting point of the first base layer 41, the first base layer 41 is required to be separated. Each of two sides of the separated first base layer 41 is bonded with a portion of the connection layer 44. The melting point of the first base layer 41 is recorded after the temperature exceeds 180°C, so as to reduce interference from the connection layer 44 on the test of the melting point of the first base layer 41.

In some embodiments, when the first housing 111 and the second housing 112 are connected, along a thickness direction of the battery cell housing 10, the sealing portion 12 includes two bonding layers 10a. Along the thickness direction of the battery cell housing 10, the sealing portion 12 includes a first region 101 not overlapping with the insulating member 40. The two bonding layers 10a located in the first region 101 are bonded together. Twice a thickness of the first base layer 41 is less than a sum of thicknesses of the two bonding layers 10a after hot pressing, or a sum of thicknesses of the first base layers 41 on two sides of the tab 30 is less than a sum of thicknesses of the two bonding layers 10a. Because the first base layer 41 has a high melting point and cannot melt during encapsulation, if the thickness of the first base layer 41 is too large, the first base layer 41 is not melt after encapsulation, and pore channels are likely to appear, leading to leakage. External water vapor can easily enter the interior of the battery cell housing 10, causing a short circuit. By ensuring that half the thickness of the first base layer 41 is less than the sum of thicknesses of the two bonding layers 10a after hot pressing, pore channels in the battery cell housing 10 are reduced, and the risk of leakage and short circuit is reduced.

In some embodiments, a sum of the thickness of the insulating member 40 and the thickness of the bonding layer 10a is less than the sum of thicknesses of the two bonding layers 10a, which further reduces pore channels in the battery cell housing 10 and reduces the risk of leakage and short circuit.

In some embodiments, along the thickness direction of the battery cell housing 10, the sealing portion 12 includes a second region 102 overlapping with the insulating member 40 and not overlapping with the tab 30. The second region 102 is adjacent to the first region 101. Along the thickness direction of the tab 30, a difference between a thickness of the first region 101 and a thickness of the second region 102 is D, with 60 µm ≤ D ≤ 100 µm, which further reduces pore channels in the battery cell housing 10 and reduces the risk of leakage and short circuit. In some embodiments, the thickness of the first base layer 41 is 6% to 10% of the thickness of the insulating member 40. If the thickness of the first base layer 41 is too small (less than 6%), the tab 30 is easily exposed. If the thickness of the first base layer 41 is too large (greater than 10%), leakage and short circuit are prone to occur. By limiting the thickness of the first base layer 41 to 6% to 10% of the thickness of the insulating member 40, pore channels in the battery cell housing 10 are reduced, and the risk of leakage and short circuit is reduced.

Optionally, the thickness of the first base layer 41 may be any one of 6%, 7%, 8%, 9%, or 10% of the thickness of the insulating member 40.

In some embodiments, a thickness d1 of the first base layer 41 meets 5 µm ≤ h1 ≤ 8 µm. Optionally, d1 may be any one of 5 µm, 6 µm, 7 µm, or 8 µm.

In some embodiments, the thickness of the first encapsulation layer 42 is 30% to 44% of the thickness of the insulating member 40. If the thickness of the first encapsulation layer 42 is too small (less than 30%), the connection strength between the first encapsulation layer 42 and the bonding layer 10a is affected, and a pressure relief channel formed by melting of the first encapsulation layer 42 is reduced, which is not conducive to pressure relief. If the thickness of the first encapsulation layer 42 is too large (greater than 44%), occupied space increases, and the headspace of the battery cell 100 is affected. Limiting the thickness of the first encapsulation layer 42 to 30% to 44% of the thickness of the insulating member 40 facilitates enhancing the connection strength between the first encapsulation layer 42 and the bonding layer 10a, facilitates pressure relief, and facilitates reducing occupied space.

Optionally, the thickness of the first encapsulation layer 42 is any one of 30%, 31%, 32%, 33%, 34%, 35%, 36%, 37%, 38%, 39%, 40%, 41%, 42%, 43%, or 44% of the thickness of the insulating member 40.

In some embodiments, a thickness d2 of the first encapsulation layer 42 meets 25 µm ≤ d2 ≤ 44 µm. Optionally, d2 may be any one of 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, or 44 µm.

In some embodiments, the thickness of the second encapsulation layer 43 is 30% to 44% of the thickness of the insulating member 40. If the thickness of the second encapsulation layer 43 is too small (less than 30%), the connection strength between the second encapsulation layer 43 and the tab 30 is affected, and a pressure relief channel formed by melting of the second encapsulation layer 43 is reduced, which is not conducive to pressure relief. If the thickness of the second encapsulation layer 43 is too large (greater than 44%), occupied space increases, and the headspace of the battery cell 100 is affected. Limiting the thickness of the second encapsulation layer 43 to 30% to 44% of the thickness of the insulating member 40 facilitates enhancing the connection strength between the second encapsulation layer 43 and the tab 30 facilitates pressure relief, and facilitates reducing occupied space.

Optionally, the thickness of the second encapsulation layer 43 is any one of 30%, 31%, 32%, 33%, 34%, 35%, 36%, 37%, 38%, 39%, 40%, 41%, 42%, 43%, or 44% of the thickness of the insulating member 40.

In some embodiments, a thickness d3 of the second encapsulation layer 43 meets 25 µm ≤ d3 ≤ 44 µm. Optionally, d3 may be any one of 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, or 44 µm.

In some embodiments, the thickness of the connection layer 44 is 3% to 8% of the thickness of the insulating member 40.

In some embodiments, a thickness h1 of the connection layer 44 meets 3 µm ≤ h1 ≤ 5 µm. When the thickness h1 is less than 3 µm, the connection strength between the first base layer 41 and the first encapsulation layer 42 is easily affected, and the process cannot achieve coating precision that is too thin. When the thickness h1 is greater than 5 µm, occupied space increases, and the headspace of the battery cell 100 is affected. Limiting 3 µm ≤ h ≤ 5 µm can enhance the connection strength between the first base layer 41 and the first encapsulation layer 42 and reduce occupied space.

Optionally, the thickness h1 may be any one of 3 µm, 3.1 µm, 3.2 µm, 3.3 µm, 3.4 µm, 3.5 µm, 3.6 µm, 3.7 µm, 3.8 µm, 3.9 µm, 4.0 µm, 4.1 µm, 4.2 µm, 4.3 µm, 4.4 µm, 4.5 µm, 4.6 µm, 4.7 µm, 4.8 µm, 4.9 µm, or 5.0 µm.

In some embodiments, a difference α between the melting point of the first base layer 41 and the melting point of the first encapsulation layer 42 is greater than 62°C, which reduces the risk of a short circuit.

In some embodiments, α ≥ 147°C, which further reduces the risk of a short circuit. In some embodiments, α ≥ 227°C, which further reduces the risk of a short circuit.

In some embodiments, a difference β between the melting point of the first base layer 41 and the melting point of the second encapsulation layer 43 is greater than 62°C, which reduces the risk of a short circuit.

In some embodiments, β ≥ 147°C, which further reduces the risk of a short circuit. In some embodiments, β ≥ 227°C, which further reduces the risk of a short circuit.

When the melting point A of the first base layer 41 is greater than or equal to 185°C, a larger difference α indicates a higher pass rate of the external short circuit test of the battery cell.

The following will further illustrate this application through specific examples.

External short circuit test and 130°C hot box test were conducted for a group of 100 battery cells 100.

In some embodiments, the external short circuit test was conducted as follows: 1. pretreatment-1CAP process: (1) the test was carried out at a temperature of 20°C (±5°C); (2) the battery cells were rested for 5 minutes; (3) charged at a constant current of 0.5C until the voltage reaches 4.5 V, and then charged at a constant voltage until the current dropped to 0.025C; and (4) rested for 5 minutes; and
test process:
appearances of the battery cells were inspected and photographed before and after the test; and
a temperature sensing wire was attached to the center of the battery cell surface; the sample was placed in a test environment at 55±2°C, and after the surface temperature of the battery cell reached to the test temperature, the battery cells were rested for 40±1 minutes; a load resistance of 80±20 mΩ was used to short-circuit the positive and negative electrodes of the sample, and the test continued until the voltage dropped below 0.1 V.

Measurement frequency: voltage and internal resistance were measured at 1 kHz after pretreatment and post-test.

Judgment criteria: The sample surface temperature did not exceed 150°C, with no fire and explosion occurred.

The test ends when one of the following conditions is met:
(1) When the sample voltage dropped below 0.1 V and the surface temperature dropped to the test environment temperature ±10°C, the test was stopped.
(2) If the voltage failed to drop to 0.1 V, the test was stopped when the surface temperature dropped to the test environment temperature.

In some embodiments, the 130°C hot box test was conducted as follows: pretreatment-1CAP process: (1) the test was carried out at a temperature of 20°C (±5°C); (2) the battery cells were rested for 5 minutes; (3) charged at a constant current of 0.5C until the voltage reaches 4.5 V, and then charged at a constant voltage until the current dropped to 0.025C; and (4) rested for 5 minutes; and
test process:
appearances of the battery cells were inspected and photographed before and after the test;
a temperature sensing wire was attached to a specified position on the battery cell surface; and
the sample was vertically placed in a chamber, which was heated at a rate of 5±2°C /min to 130±2°C, and maintained at this temperature for 60 minutes.

Measurement frequency: voltage and internal resistance were measured at 1 kHz after pretreatment and post-test.

Judgment criteria: No fire and explosion was observed.

**Table 1**

| | Material of first base layer | Meltin g point of first base layer (°C) | Melting point of first encapsulatio n layer/melting point of second encapsulatio n layer (°C) | Differenc e α, β (°C) | Pass rate of 55°C 60moh m external short circuit test | Pass rate of 130°C hot box test |
|---|---|---|---|---|---|---|
| Example 1 | PP | 185 | 123 | 62 | 70/100 | 90/100 |
| Example 2 | PET | 220 | 123 | 97 | 75/100 | 91/100 |
| Example 3 | PET | 240 | 123 | 117 | 80/100 | 92/100 |
| Example 4 | PEN | 270 | 123 | 147 | 91/100 | 94/100 |
| Example 5 | PI | 300 | 123 | 177 | 93/100 | 96/100 |
| Example 6 | PI | 350 | 123 | 227 | 100/100 | 97/100 |
| Example 7 | PEI | 400 | 123 | 277 | 100/100 | 100/10 0 |
| Example 8 | PAI | 500 | 123 | 377 | 100/100 | 100/10 0 |
| Comparative 1 | PET | 165 | 123 | 42 | 65/100 | 85/100 |
| Comparative 2 | PP | 160 | 123 | 37 | 40/100 | 92/100 |
| Example 9 | PI | 350 | 145 | 205 | 100/100 | 86/100 |
| Example 10 | PI | 350 | 125 | 225 | 100/100 | 96/100 |
| Example 11 | PI | 350 | 130 | 220 | 100/100 | 90/100 |
| Example 12 | PI | 350 | 120 | 230 | 100/100 | 99/100 |
| Example 13 | PI | 350 | 115 | 235 | 100/100 | 100/10 0 |

It can be learned from Table 1 that on the basis that the melting point A of the first base layer 41 is greater than or equal to 185°C, the higher the melting point A is, the greater the difference α between the melting point A of the first base layer 41 and the melting point B of the first encapsulation layer 42 is, the greater the difference β between the melting point A of the first base layer 41 and the melting point B of the second encapsulation layer 43 is, and the higher the pass rate of the external short circuit test is, which reduces the risk of a short circuit.

When the melting point A of the first base layer 41 is greater than or equal to 185°C, the melting point B of the first encapsulation layer 42 is within the range of 115°C ≤ B ≤ 145°C, and the melting point C of the second encapsulation layer 43 is within the range of 115°C ≤ C ≤ 145°C, the higher the melting point A of the first base layer 41 is, the lower the melting point B of the first encapsulation layer 42 is, the lower the melting point C of the second encapsulation layer 43 is, the greater the difference α between the melting point A of the first base layer 41 and the melting point B of the first encapsulation layer 42 is, the greater the difference β between the melting point A of the first base layer 41 and the melting point B of the second encapsulation layer 43 is, and the higher the pass rate of the external short circuit test is, which reduces the risk of a short circuit, and the higher the pass rate of the 130°C hot box test is, which reduces the risk of fire.

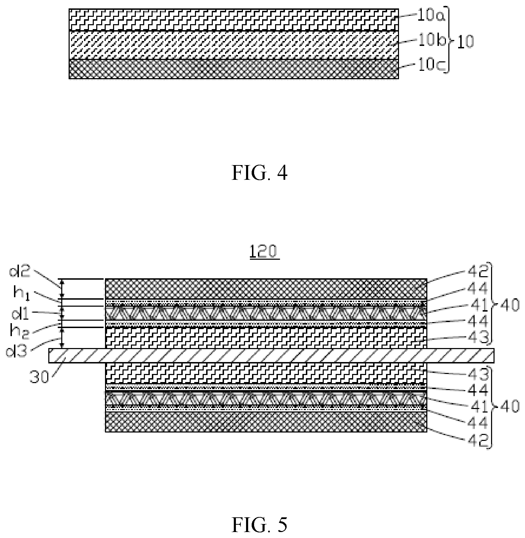

Referring to FIG. 5, an embodiment of this application provides a tab assembly 120 including a tab 30 and two insulating members 40 according to any one of the embodiments above. Along a thickness direction of the tab 30, the tab 30 is disposed between the two insulating members 40.

In some embodiments, along a width direction of the tab 30, a width of the insulating member 40 is greater than a width of the tab 30. In the second region 102, the second encapsulation layer 43 of one insulating member 40 and the second encapsulation layer 43 of another insulating member 40 are bonded together.

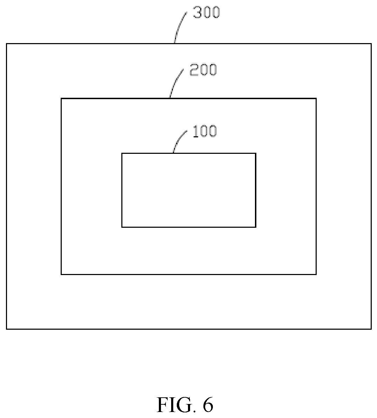

Referring to FIG. 6, this application further provides a battery 200 using the battery cell 100 described above. The battery 200 includes at least one battery cell 100.

Referring to FIG. 6, this application further provides an electrical apparatus 300 using the battery 200 described above. In one embodiment, the electrical apparatus 300 of this application may be, but is not limited to, an electronic device, an unmanned aerial vehicle, a backup power supply, an electric vehicle, an electric motorcycle, an electric bicycle, an electric tool, or a large household battery.

Those of ordinary skill in the art should be aware of that the foregoing embodiments are only intended to describe this application, but not to limit this application. Appropriate modifications and variations made to the foregoing embodiments without departing from the essential spirit and scope of this application all fall within the scope of this application.

## Claims

1. An insulating member configured to connect a tab and comprising a first base layer, a first encapsulation layer, and a second encapsulation layer, wherein the first base layer is located between the first encapsulation layer and the second encapsulation layer, and a melting point A of the first base layer meets A ≥ 185°C.

2. The insulating member according to claim 1, wherein the melting point of the first base layer is higher than a melting point of the first encapsulation layer, and the melting point of the first base layer is higher than a melting point of the second encapsulation layer.

3. The insulating member according to claim 1, wherein a thickness of the first base layer is 6% to 10% of a thickness of the insulating member.

4. The insulating member according to any one of claims 1 to 3, wherein 220°C ≤ A ≤ 400°C.

5. The insulating member according to any one of claims 1 to 3, wherein 300°C ≤ A ≤ 500°C.

6. The insulating member according to any one of claims 1 to 5, wherein a melting point B of the first encapsulation layer meets 115°C ≤ B ≤ 145°C, and/or a melting point C of the second encapsulation layer meets 115°C ≤ C ≤ 145°C.

7. The insulating member according to any one of claims 1 to 6, wherein a difference between the melting point of the first base layer and the melting point of the first encapsulation layer is greater than 62°C, and/or a difference between the melting point of the first base layer and the melting point of the second encapsulation layer is greater than 62°C.

8. The insulating member according to any one of claims 1 to 7, wherein a difference between the melting point of the first base layer and the melting point of the first encapsulation layer is greater than 147°C, and/or a difference between the melting point of the first base layer and the melting point of the second encapsulation layer is greater than 147°C.

9. The insulating member according to any one of claims 1 to 8, wherein a difference between the melting point of the first base layer and the melting point of the first encapsulation layer is greater than 227°C; and/or a difference between the melting point of the first base layer and the melting point of the second encapsulation layer is greater than 227°C.

10. The insulating member according to any one of claims 1 to 9, wherein after the temperature exceeds 180°C, a softening melting interval of the first base layer is 200°C to 500°C.

11. The insulating member according to any one of claims 1 to 10, wherein a melting range of the insulating member is 200°C to 500°C.

12. The insulating member according to any one of claims 1 to 11, wherein a thickness of the first encapsulation layer is 30% to 44% of the thickness of the insulating member.

13. The insulating member according to any one of claims 1 to 12, wherein a thickness of the second encapsulation layer is 30% to 44% of the thickness of the insulating member.

14. The insulating member according to any one of claims 1 to 13, wherein the insulating member comprises two connection layers, the first encapsulation layer is connected to the first base layer through one of the connection layers, and the second encapsulation layer is connected to the first base layer through the other of the connection layers.

15. The insulating member according to claim 14, wherein a thickness of the connection layer is 3% to 8% of the thickness of the insulating member.

16. The insulating member according to claim 14, wherein a melting point D of the connection layer meets 100°C ≤ D ≤ 180°C.

17. The insulating member according to claim 14, wherein the connection layer comprises one or more of hot melt adhesive, aminosilane glue, polyurethane adhesive, epoxy resin, and acrylic adhesive.

18. The insulating member according to any one of claims 14 to 17, wherein the connection layer comprises a first type adhesive and a second type adhesive, the first type adhesive comprises one or more of silica gel, thickener, and phenolic resin, and the second type adhesive comprises one or more of silane coupling agent, curing agent, and amino resin.

19. The insulating member according to any one of claims 1 to 18, wherein the first base layer comprises one or more of polyimide, polyamide-imide, polyethyleneimine, polyethylene naphthalate, polyethylene terephthalate, and modified polypropylene.

20. A tab assembly, comprising a tab and two insulating members according to any one of claims 1 to 19, wherein along a thickness direction of the tab, the tab is disposed between the two insulating members.

21. The tab assembly according to claim 20, wherein the tab assembly is soaked in dimethyl carbonate for 24 hours, and a peel strength between the tab and the insulating member is 0.2 N/mm to 2.0 N/mm.

22. A battery cell, comprising:
a battery cell housing comprising a body portion and a sealing portion;
an electrode assembly disposed in the body portion; and
the tab assembly according to any one of claims 20 and 21, wherein the tab is connected to the electrode assembly and extends from the sealing portion, and along a thickness direction of the tab, the tab is disposed between the two insulating members;
wherein each of the insulating members comprises a first base layer, a first encapsulation layer, and a second encapsulation layer, along the thickness direction of the tab, the first base layer is located between the first encapsulation layer and the second encapsulation layer, the first encapsulation layer is connected to the sealing portion, the second encapsulation layer is connected to the tab, and after the temperature exceeds 180°C, a melting point A of the first base layer meets A ≥ 185°C.

23. The battery cell according to claim 22, wherein along a thickness direction of the battery cell housing, the sealing portion comprises two bonding layers; and
along the thickness direction of the battery cell housing, the sealing portion comprises a first region not overlapping with the insulating member, the two bonding layers located in the first region are bonded together, twice a thickness of the first base layer is less than a sum of thicknesses of the two bonding layers, or a sum of thicknesses of the first base layers on two sides of the tab is less than a sum of thicknesses of the two bonding layers.

24. The battery cell according to claim 23, wherein in the sealing portion, a sum of a thickness of the insulating member and the thickness of the bonding layer is less than the sum of thicknesses of the two bonding layers.

25. The battery cell according to claim 23, wherein along the thickness direction of the battery cell housing, the sealing portion comprises a second region overlapping with the insulating member and not overlapping with the tab, the second region is adjacent to the first region, and along the thickness direction of the tab, a difference between a thickness of the first region and a thickness of the second region is D, with 60 µm ≤ D ≤ 100 µm.

26. The battery cell according to any one of claims 22 to 25, wherein the tab comprises a first section, a second section, and a third section; wherein
at least a portion of the first section is connected to the electrode assembly;
the second section is bent and connected to the first section, and the second section accounts for 5% to 70% of a thickness of the battery cell; and
the third section is bent and connected to the second section, and a portion of the third section extends from the sealing portion.

27. A battery, comprising the battery cell according to any one of claims 22 to 26.

28. An electrical apparatus, comprising the battery according to claim 27.
